# EUROPÄISCHE PATENTSCHRIFT

(11) **EP 3 283 928 B1**
(45) Veröffentlichungstag und Bekanntmachung des Hinweises auf die Patenterteilung: **05.08.2020**
(21) Anmeldenummer: 16711661.5
(22) Anmeldetag: 24.03.2016
(51) Int. Cl.: G05B 19/042, H04L 25/02

(54) **VERFAHREN ZUM AUTOMATISCHEN HINZU- ODER WEGSCHALTEN EINES KOMMUNIKATIONSWIDERSTANDES EINES HART-GERÄTES**
METHOD FOR AUTOMATICALLY CONNECTING OR DISCONNECTING A COMMUNICATION RESISTOR OF A HART DEVICE
PROCÉDÉ DE BRANCHEMENT OU DE DÉBRANCHEMENT AUTOMATIQUE D'UNE RÉSISTANCE DE COMMUNICATION D'UN DISPOSITIF HART

(30) Priorität: 17.04.2015 DE 102015105887
(43) Veröffentlichungstag der Anmeldung: 21.02.2018
(73) Patentinhaber: Endress+Hauser Process Solutions AG, 4153 Reinach (CH)
(72) Erfinder: BIHLER, Fabian, 79618 Rheinfelden (DE); Fiedler, Marc, 4153 Reinach (DE)
(74) Vertreter: Andres, Angelika Maria
(86) Internationale Anmeldenummer: PCT/EP2016/056561
(87) Internationale Veröffentlichungsnummer: WO 2016/165928

(56) Entgegenhaltungen:
- DE-A1- 19 646 219
- DE-A1-102014 105 292
- US-A1- 2007 120 574

## Beschreibung

Die Erfindung bezieht sich auf ein Verfahren zum automatischen Hinzu- oder Wegschalten eines Kommunikationswiderstandes eines HART-Gerätes, bspw. einer HART-Kommunikationsbox.

In der Prozess- ebenso wie in der Automatisierungstechnik werden vielfach Feldgeräte eingesetzt, die zur Erfassung und/oder Beeinflussung von Prozessgrößen dienen. Zur Erfassung von Prozessgrößen dienen Messgeräte, wie beispielsweise Füllstandsmessgeräte, Durchflussmessgeräte, Druck- und Temperaturmessgeräte, pH-Messgeräte, Leitfähigkeitsmessgeräte, usw., welche die entsprechenden Prozessgrößen Füllstand, Durchfluss, Druck, Temperatur, pH-Wert bzw. Leitfähigkeit erfassen. Zur Beeinflussung der Prozessgrößen werden Aktoren verwendet, wie Ventile oder Pumpen, über die z.B. der Durchfluss einer Flüssigkeit in einer Rohrleitung oder der Füllstand eines Mediums in einem Behälter geändert wird. Als Feldgeräte werden im Prinzip alle Geräte bezeichnet, die prozessnah eingesetzt werden und die prozessrelevante Informationen liefern oder verarbeiten. Eine Vielzahl solcher Feldgeräte wird von der Firmengruppe Endress+Hauser angeboten und vertrieben. Unter dem in Verbindung mit der Erfindung verwendeten Begriff Feldgerät sind somit alle Typen von Messgeräten und Aktoren zu subsumieren. Weiterhin umfasst der Begriff Feldgerät aber auch z.B. ein Gateway, einen Funkadapter oder andere in ein Bussystem integrierte/integrierbare Busteilnehmer.

Die Steuerung erfolgt hierbei von einem Leitsystem aus, das mit den einzelnen Feldgeräten über einen Datenbus verbunden ist. Über den Datenbus, auch Feldbus genannt, werden alle für die Steuerung notwendigen Informationen zwischen dem Leitsystem und den Feldgeräten ausgetauscht. Ein vielfach eingesetzter Daten- bzw. Feldbus arbeitet nach dem HART-Standard, der HART® Foundation. Feldgeräte die nach dem HART-Standard arbeiten, werden auch als HART-Geräte bezeichnet.

Neben der reinen Messwertübertragung erlauben Feldgeräte auch die Übertragung von verschiedenen im Feldgerät abgespeicherten Informationen wie z. B. Konfigurations- und/oder Parametrierdaten (Nullpunkt, Messwertspanne etc.), Messkurven sowie Diagnoseinformationen. Die Parameter können vom Leitsystem oder von einem Bedien- und Anzeigegerät aus eingestellt werden.

Dieser Vorgang wird auch als Konfigurierung und/oder Parametrierung des Feldgerätes bezeichnet. Die Daten hierfür werden als Konfigurations- und/oder Parametrierdaten bezeichnet.

Bei jeder Erstinstallation oder bei einem Gerätetausch muss das Feldgerät konfiguriert und/oder parametriert werden.

Hierzu läuft eine Bedien- und/oder Beobachtungssoftware meist auf einer tragbaren Rechnereinheit (PCs, Laptops) ab, die bspw. über eine USB- oder auch eine serielle COM-Schnittstelle (z.B. RS232, RS485) mit einer an den Feldbus angeschlossenen Vorrichtung, einer so genannten HART-Kommunikationsbox, zur Übertragung der Konfigurations- und/oder Parametrierdaten verbunden ist.

Um eine dem HART-Standard konforme Kommunikation zwischen einer solchen HART-Kommunikationsbox und einem Feldgerät aufzubauen, bedarf es einer Impedanzanpassung, da nur genau eine sogenannte "low-impedance" (Abkürzung: LI) Installation innerhalb der entsprechenden Stromschleife vorhanden sein darf.

Da die aktuellen Feldgeräte sowohl "low-impedance" als auch "high-impedance" (Abkürzung HI) Schnittstellen aufweisen, muss ein Servicetechniker dafür Sorge tragen, dass die HART-Kommunikationsbox entsprechend an die Stromschleife angepasst und angeschlossen wird. Dies kann bspw. durch eine spezielle HART-Kommunikationsbox, bei der mittels eines Schalters ein entsprechender Kommunikationswiderstand (auch Bürde genannt) zuschaltbar ist erfolgen. Alternativ kann ein Servicetechniker händisch einen entsprechenden Widerstand in die bestehende Installation einbringen.

Beide Varianten setzten voraus, dass der Servicetechniker weiß, ob ein Kommunikationswiderstand zugeschaltet werden muss oder, ob bereits ein Kommunikationswiderstand vorhanden ist und somit eine Zuschaltung überflüssig ist.

Bei beiden Varianten können, bspw. durch falsche Stellung des manuellen Schalters der HART-Kommunikationsbox oder auch durch händisches Einbringen eines eigentlich nicht benötigten zusätzlichen Kommunikationswiderstandes, folgende Probleme entstehen:
1.) Sind in der Installation bzw. der Stromschleife fälschlicherweise zwei Kommunikationswiderstände parallel geschaltet, kann sich die Impedanz und damit die Signale bzw. die Signalamplituden derartig verringern, dass keine Kommunikation mehr möglich ist.
2.) Ist in der Installation kein Kommunikationswiderstand vorhanden und werden zwei "high-impedance" Geräte zusammengeschaltet, erhöhen sich die Signale bzw. die Signalamplituden und die Eingänge der Kommunikationsbox kann übersteuert werden. Dies kann zu Kommunikationsproblemen oder sogar zu Ausfällen führen.

Die DE 10 2014 105292 A1 offenbart eine Vorrichtung zum Übertragen von Konfigurations- und/oder Parametrierdaten zwischen einem Feldgerät und einem Bediengerät. Hierbei wird neben den Konfigurations- und/oder Parametrierdaten auch eine Zusatzinformation, die ebenfalls bei der Erstinstallation oder auch beim Gerätetausch benötigt wird, auf das Bediengerät übertragen. Auf diese Weise wird einem Bediener, bspw. einem Servicetechniker ohne weiteres Messequipment die benötigte Zusatzinformation zugänglich gemacht.

Die DE 196 46 219 A1 offenbart eine Schaltung für die Kommunikation externer Geräte mit einer zentralen/dezentralen Datenverarbeitungsanlage über einen Bus, vorzugsweise für die Kommunikation externer Feldgeräte mit einer Überwachungs- und Regelungsanlage über einen Feldbus für die Prozessdatenerfassung, Steuerung und Regelung in der Sensor- und Aktortechnik. Hierbei umfasst die Schaltung Buserkennungs- und - Anpassungsschaltkreise zur automatischen Erkennung des für das externe Gerät erforderlichen Bussystems und zur automatischen Anpassung auf dieses Bussystem.

Der Erfindung liegt die Aufgabe zugrunde eine möglichst fehlerfreie HART-Kommunikationsverbindung zu ermöglichen.

Die Aufgabe wird durch ein Verfahren gemäß Anspruch 1 und ein HART-Gerät gemäß Anspruch 8 gelöst.

Erfindungsgemäß wird also der Kommunikationswiderstand des HART-Gerätes, bspw. einer HART-Kommunikationsbox, zu- oder abgeschaltet. Das automatische Zu- oder Abschalten des Kommunikationswiderstandes bzw. der Bürde soll eine möglichst fehlerfreie Kommunikationsverbindung gewährleisten und die oben beschriebenen Probleme vermeiden. Somit wird die Anwendung des HART-Gerätes vereinfacht und die Bedienbarkeit verbessert.

Eine vorteilhafte Ausführungsform des erfindungsgemäßen Verfahrens sieht vor, dass als Testsignal eine Präambel innerhalb einer HART-Kommunikation verwendet wird.

Das HART-Protokoll basiert auf der Übertragung von Datentelegrammen, die durch eine sogenannte Präambel-Phase eingeleitet werden, in die mindestens fünf bis höchstens 20 Zeichen mit dem Wert 0 x FF gesendet werden. Die Präambel dient dabei der Synchronisation zwischen Master und Slave.

Eine vorteilhafte Ausführungsform des erfindungsgemäßen Verfahrens sieht vor, dass das rückgelesene Testspannungssignal gefiltert wird, bevor es mit dem Referenzsignal verglichen wird. Hierbei sieht eine erste Variante vor, dass das Testspannungssignal durch einen Bandpass mit einer Mittenfrequenz von ca. 1200 Hz gefiltert wird und eine zweite alternative Variante sieht vor, dass das Testspannungssignal durch einen Tiefpass mit einer Grenzfrequenz von ca. 1200 Hz gefiltert wird.

Eine vorteilhafte Ausführungsform des erfindungsgemäßen Verfahrens sieht vor, dass der Vergleich des Testspannungssignals mit dem Referenzsignal über eine vordefinierte Zeitdauer miteinander verglichen wird und nur in dem Fall, dass das Testspannungssignal für die vordefinierte Zeitdauer das Referenzsignal überschreitet der Kommunikationswiderstand zugeschaltet wird.

Eine weitere vorteilhafte Ausführungsform des erfindungsgemäßen Verfahrens sieht vor, dass vor dem Aussenden eines Testsignales der Kommunikationswiderstand weggeschaltet wird.

Erfindungsgemäß wird nach dem Hinzuschalten des Kommunikationswiderstandes ein Carrier-Detect-Signal zur Verifikation verwendet, wobei in dem Fall, dass das Carrier-Detect-Signal ein gültiges Trägersignal anzeigt, der Kommunikationswiderstand hinzugeschaltet bleibt. Erfindungsgemäß wird in dem Fall, dass das Carrier-Detect-Signal ein ungültiges Trägersignal anzeigt, der Kommunikationswiderstand weggeschaltet.

Hinsichtlich des HART-Gerätes wird die Aufgabe durch ein HART-Gerät mit einer Kommunikationselektronik, welche dazu ausgelegt ist, das zuvor beschriebene erfindungsgemäße Verfahren durchzuführen, gelöst.

Die Erfindung wird anhand der nachfolgenden Zeichnungen näher erläutert. Es zeigt:
Fig. 1: eine schematische Darstellung einer aus dem Stand der Technik bekannten HART-Kommunikationsbox, welche an eine Stromschleife bzw. einen Regelkreis mit einem Kommunikationswiderstand angeschlossen ist,
Fig. 2: eine schematische Darstellung der HART-Kommunikationsbox, welche über einen Kommunikationswiderstand an die Stromschleife bzw. den Regelkreis angeschlossen ist, und
Fig. 3: eine schematische Darstellung eines erfindungsgemäßen HART-Gerätes in Form einer HART-Kommunikationsbox mit einer Kommunikationselektronik, die dazu ausgelegt ist, das erfindungsgemäße Verfahren auszuführen.

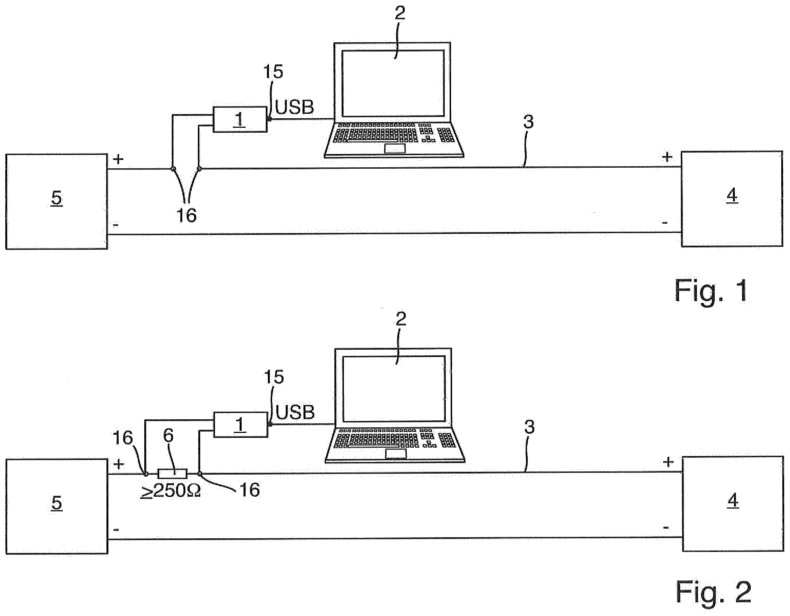

Fig. 1 und 2 zeigen die beiden aus dem Stand der Technik bekannten Anschlussvarianten einer an eine Stromschleife bzw. einen Regelkreis 3 angebunden HART-Kommunikationsbox 1. Hierbei ist die HART-Kommunikationsbox 1 zu erklärungszwecken gewählt worden. Die Erfindung ist aber prinzipiell für beliebige HART-Geräte einsetzbar.

Die Fig.1 und 2 zeigen weiter schematisch eine prinzipielle Installation, bei der zumindest ein Feldgerät 4 über eine Stromschleife 3 mit zumindest einer übergeordneten Einheit, bspw. einem Leitsystem oder wie in Fig. 1 dargestellt einem Bedieneinheit 2, verbunden ist.

In Fig. 1 befindet sich der zur konformen HART-Kommunikation benötigte Kommunikationswiderstand 6 innerhalb der HART-Kommunikationsbox (nicht dargestellt in Fig. 1).
Im Gegensatz dazu zeigt Fig. 2 eine Installation bei der der benötigte Kommunikationswiderstand 6 bereits in der Stromschleife 3, bspw. durch händisches einbringen eines Servicetechnikers, vorhanden ist. In diesem Fall wird das Spannungssignal über diesen Widerstand durch die HART-Kommunikationsbox 1 abgegriffen.

Sowohl die in Fig. 1 als auch die in Fig. 2 dargestellte HART-Kommunikationsbox 1 weisen eine erste Schnittstelle 15, die bspw. gemäß dem USB-Standard ausgebildet ist und eine zweite Schnittstelle 16 in Form von Anschlussklemmen auf.

Die erste Schnittstelle 15 verbindet die HART-Kommunikationsbox 1 mit der Bedieneinheit 2, welche zur Konfiguration und/oder Parametrierung eines Feldgerätes 2 dient. Die in Fig. 1 dargestellte USB-Verbindung ist nur exemplarisch und es versteht sich von selbst, dass eine andere Form der Kommunikationsverbindung, z.B. RS232, Bluetooth, etc. ebenfalls möglich ist.

Über die zweite Schnittstelle 16 ist die HART-Kommunikationsbox 1 an die Stromschleife 3 angebunden. Typischerweise ist hierzu die zweite Schnittstelle 16 in Form von Anschlussklemmen realisiert.

Über die beiden Schnittstellen 15 und 16 verbindet die HART-Kommunikationsbox 1 die tragbare Rechnereinheit bzw. Bedieneinheit 2 mit der Stromschleife 3 datenleitend, sodass über die Bedieneinheit 2, auf der eine hierfür vorgesehene Bedien- und/oder Beobachtungssoftware abläuft, und die Stromschleife 3 mit einem an die Stromschleife 3 angebundenen Feldgerät 4 kommuniziert werden kann.

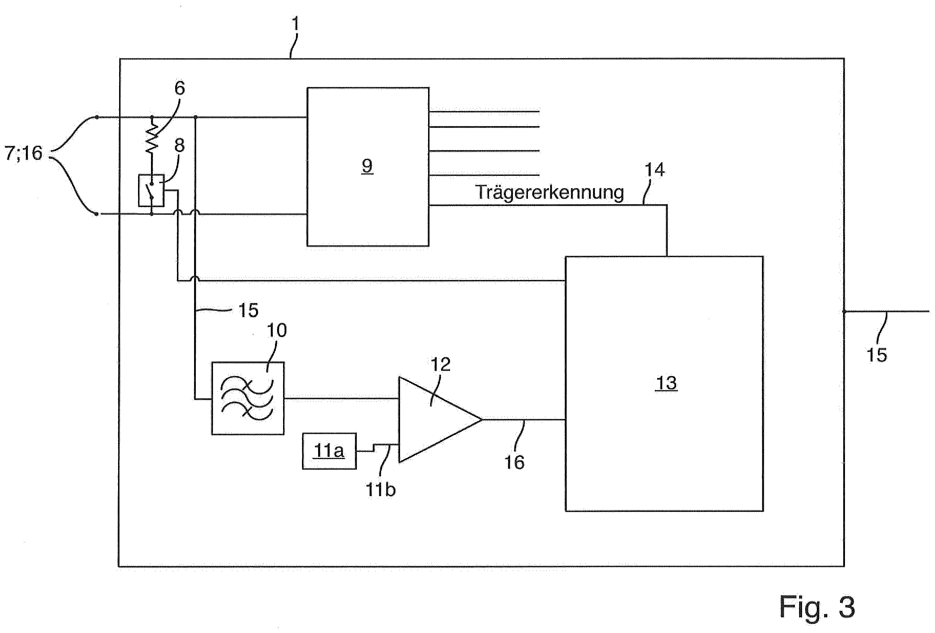

In Fig. 3 ist eine schematische Darstellung eines erfindungsgemäßen HART-Gerätes bzw. einer HART-Kommunikationsbox 1 mit einer innerhalb der Kommunikationsbox 1 befindlichen Kommunikationselektronik dargestellt. Die Kommunikationselektronik weist eine Recheneinheit, bspw. einen Mikroprozessor 13 und ein HART-Modem 9 auf, die zusammen die Umsetzung der Daten, insbesondere der Konfigurationsdaten und/oder Parametrierdaten, zwischen der ersten Schnittstelle 15 und der zweite Schnittstelle 16 realisieren. Auf diese Weise findet eine Vermittlung bzw. Umsetzung der Konfigurationsdaten und/oder Parametrierdaten zwischen der ersten Schnittstelle 15, die gemäß dem USB-Standard ausgebildet ist, und der zweiten Schnittstelle 16, die gemäß dem HART-Standard ausgebildet ist, statt.

Um das unten beschriebene erfindungsgemäße Verfahren umsetzen zu können weist die Kommunikationselektronik weiter einen Kommunikationswiderstand, welcher automatisch über einen Schalter bedarfsabhängig von dem Mikroprozessor zugeschaltet bzw. weggeschaltet werden kann und einen Komparator auf. Zusätzlich weist die Kommunikationselektronik ein Filterelement bspw. einen Bandpass- oder Tiefpassfilter auf. Das Filterelement dient dazu, Störsignale, die bspw. durch äußere EMV-Einflüsse erzeugt werden herauszufiltern und somit eine ungewollte Beeinflussung des eigentlichen Signals zu vermeiden. Prinzipiell ist die Erfindung jedoch auch ohne das Filterelement denkbar.

Das erfindungsgemäße Verfahren sieht vor, dass von dem Ausgangszustand "high-impedance" der HART-Kommunikationsbox 1 ausgegangen wird, d.h. der Kommunikationswiderstand 6 standardmäßig weggeschaltet ist. Auf diese Weise muss nur ein fehlerhaftes Szenario erkannt werden: die fehlerhafte Verbindung zweier HI-Geräte, also bspw. einem HI-Feldgerät und der HART-Kommunikationsbox ohne bzw. mit weggeschaltetem Kommunikationswiderstand. Die Verbindung zweier HI-Geräte hat zur Folge, dass die Signalpegel des HART-Signals zu hoch sind und dies durch eine Analyse der Peak-Werte erkennbar ist. Um diese Analyse durchzuführen wird ein Testsignal von der HART-Kommunikationsbox 1 über die Anschlussklemmen ausgesendet und anschließend ein Testspannungssignal, welches auf dem ausgesendeten Testsignal basiert, rückgelesen. Zweckmäßig wird die Präambel, die aus drei oder mehr ausgesendeten 0xFF Hexzeichen, die in diesem Fall neben der Synchronisation somit auch als Testsignal dient, verwendet.

Damit eine ungewollte bzw. fälschliche Hinzuschaltung des Kommunikationswiderstandes 6 möglichst verhindert wird, ist es von Vorteil, wenn das von den Anschlussklemmen der HART-Kommunikationsbox 1 kommende rückgelesene Testspannungssignal (typischerweise 1200 Hz Signale) gefiltert wird. Dieses gefilterte Signal wird anschließend dem Komparator 12 zugeführt.

Der Komparator 12 dient dazu, einen Vergleich des Testspannungssignals mit einem Referenzsignal bzw. einem Referenzpegel zu vergleichen. In dem Fall, dass das Referenzsignal bzw. der Referenzpegel überschritten wird, kann der an den Komparator angeschlossene Mikroprozessor diese Überschreitung als Schaltsignal zum Hinzuschalten des Kommunikationswiderstandes über den Schalter benutzen. Typischerweise wird das Hinzuschalten des Kommunikationswiderstandes durch den Mikroprozessor erst nach der Überschreitung des Referenzpegels für eine vordefinierte Zeitdauer durchgeführt. Auf diese Weise können Störeinflüsse (EMV, etc.) minimiert werden.

Um eine Verifikation der durchgeführten Maßnahme zu ermöglichen, wird erfindungsgemäß ein Carrier-Detect-Signal verwendet, welches von dem HART-Modem 9 ausgegeben wird. Das Carrier-Detect-Signal ist ein Kontrollsignal, das von dem HART-Modem 9 standardmäßig erzeugt wird und anzeigt, dass es Daten empfangen kann. Typischerweise kann dieses Signal nur die logischen Zustände "High" oder "Low" bzw. einen Einspegel oder einen Nullpegel annehmen.

In dem Fall, dass ein gültiges Carrier-Detect -Signal vorliegt, kann davon ausgegangen werden, dass das über die Anschlussklemmen empfangene Signal fehlerfrei ist. Somit wird in dem Fall, dass das Carrier-Detect-Signal einen logischen Einspegel bzw. "High" annimmt, die Maßnahme, also das Hinzuschalten des Kommunikationswiderstandes 6 als erfolgreich angesehen. Im Gegensatz hierzu, wird in dem Fall, dass das Carrier-Detect-Signal einen logischen Nullpegel annimmt, die Maßnahme als nicht erfolgreich angesehen und der hinzugeschaltete Kommunikationswiderstand 6 wieder weggeschaltet.

### Bezugszeichenliste

- 1: HART-Gerät bzw. HART-Kommunikationsbox
- 2: Bedieneinheit
- 3: Stromschleife bzw. Regelkreis
- 4: Feldgerät
- 5: Messumformerspeisegerät
- 6: Kommunikationswiderstand bzw. Bürde
- 7: Anschlussklemmen
- 8: Schalter
- 9: HART-Modem
- 10: Filter
- 11: Referenzsignal
- 12: Komparator
- 13: Recheneinheit bzw. Mikrocontroller
- 14: Carrier-Detect-Signal
- 15: Erste Schnittstelle
- 16: Zweite Schnittstelle

## Patentansprüche

1. Verfahren zum Aufbau einer dem HART-Standard konformen Kommunikation zwischen einem HART-Gerät (1) und einem Feldgerät (4) der Prozess- und Automatisierungstechnik durch automatisches Hinzu- oder Wegschalten eines Kommunikationswiderstandes des HART-Gerätes (1), wobei das HART-Gerät (1) ein HART-Modem (9) enthält und über Anschlussklemmen an eine Stromschleife angebunden ist, wobei das Feldgerät (4) an die Stromschleife angeschlossen ist und wobei ein Messumformerspeisegerät (5) an die Stromschleife angeschlossen ist, aufweisend die folgenden Schritte:
- Aussenden eines Testsignales auf der Stromschleife (3) mittels des HART-Gerätes (1) über die Anschlussklemmen;
- Rücklesen eines Testspannungssignals von der Stromschleife (3) mittels der Anschlussklemmen des HART-Geräts, welches Testspannungssignal auf dem ausgesendeten Testsignal basiert;
- Vergleich des Testspannungssignals mit einem Referenzsignal (11b);
- Zuschalten des Kommunikationswiderstandes (6) in die Stromschleife (3) in dem Fall, dass das Testspannungssignal das Referenzsignal (11b) überschreitet,
wobei nach dem Zuschalten des Kommunikationswiderstandes (6) ein von dem HART-Modem (9) ausgegebenes Carrier-Detect-Signal (14) zur Verifikation verwendet wird und in dem Fall, dass das Carrier-Detect-Signal (14) ein gültiges Trägersignal anzeigt, der Kommunikationswiderstand (6) zugeschaltet bleibt, und
wobei in dem Fall, dass das Carrier-Detect-Signal (14) ein ungültiges Trägersignal anzeigt, der Kommunikationswiderstand (6) weggeschaltet wird.

2. Verfahren nach Anspruch 1, wobei als Testsignal eine Präambel innerhalb einer HART-Kommunikation verwendet wird.

3. Verfahren nach Anspruch 1 oder 2, wobei das rückgelesene Testspannungssignal gefiltert wird, bevor es mit dem Referenzsignal verglichen wird.

4. Verfahren nach Anspruch 3, wobei das Testspannungssignal durch einen Bandpass mit einer Mittenfrequenz von ca. 1200 Hz gefiltert wird.

5. Verfahren nach Anspruch 3, wobei das Testspannungssignal durch einen Tiefpass mit einer Grenzfrequenz von ca. 1200 Hz gefiltert wird.

6. Verfahren nach einem oder mehreren der vorhergehenden Ansprüche, wobei der Vergleich des Testspannungssignals mit dem Referenzsignal (11b) über eine vordefinierte Zeitdauer miteinander verglichen wird und nur in dem Fall, dass das Testspannungssignal für die vordefinierte Zeitdauer das Referenzsignal (11b) überschreitet der Kommunikationswiderstand (6) zugeschaltet wird.

7. Verfahren nach einem oder mehreren der vorhergehenden Ansprüche, wobei vor dem Aussenden eines Testsignales der Kommunikationswiderstand (6) weggeschaltet wird.

8. HART-Gerät mit einer Kommunikationselektronik, welche dazu ausgelegt ist, das Verfahren nach einem oder mehreren der vorhergehenden Ansprüche durchzuführen.

## Claims

1. Procedure for the establishment of communication compliant with the HART standard between a HART device (1) and a field device (4) used in process and automation engineering by automatically adding or removing a communication resistor of the HART device (1),
wherein the HART device (1) contains a HART modem (9) and is connected to a current loop via terminals, wherein the field device (4) is connected to the current loop and wherein a transmitter power supply unit (5) is connected to the current loop,
said procedure comprising the following steps:
- A test signal is transmitted on the current loop (3) by means of the HART device (1) via the terminals;
- A test voltage signal is read back from the current loop (3) by means of the terminals of the HART device, said test voltage signal being based on the transmitted test signal;
- Comparison of the test voltage signal with a reference signal (11b);
- Addition of the communication resistor (6) to the current loop (3) if the test voltage signal exceeds the reference signal (11b),
wherein a carrier detect signal (14) which is output by the HART modem is used for verification purposes after the communication resistor (6) is added to the circuit, and in the event that the carrier detect signal (14) indicates a valid carrier signal the communication resistor (6) remains in the circuit, and in the event that the carrier detect signal (14) indicates an invalid carrier signal the communication resistor (6) is removed from the circuit.

2. Procedure as claimed in Claim 1, wherein a preamble within a HART communication is used as the test signal.

3. Procedure as claimed in Claim 1 or 2, wherein the test voltage signal which is read back is filtered before it is compared with the reference signal.

4. Procedure as claimed in Claim 3, wherein the test voltage signal is filtered by a bandpass with a center frequency of approx. 1200 Hz.

5. Procedure as claimed in Claim 3, wherein the test voltage signal is filtered by a low-pass with a limit frequency of approx. 1200 Hz.

6. Procedure as claimed in one or more of the previous claims, wherein the test voltage signal is compared with the reference signal (11b) over a predefined period of time and the communication resistor (6) is only added to the circuit in the event that the test voltage signal exceeds the reference signal (11b) for the predefined period of time.

7. Procedure as claimed in one or more of the previous claims, wherein the communication resistor (6) is removed from the circuit before the transmission of a test signal.

8. HART device with communication electronics, which are designed to carry out the procedure as defined in one or more of the previous claims.

## Revendications

1. Procédé destiné à l'établissement d'une communication conforme au standard HART entre un appareil HART (1) et un appareil de terrain (4) de la technique des process et d'automatisation par une mise en ou hors circuit automatique d'une résistance de communication de l'appareil HART (1),
l'appareil HART (1) contenant un modem HART (9) et étant relié à une boucle de courant par l'intermédiaire de bornes de raccordement, l'appareil de terrain (4) étant raccordé à la boucle de courant et une unité d'alimentation de transmetteur (5) étant raccordée à la boucle de courant,
lequel procédé comprend les étapes suivantes :
- Émission d'un signal de test sur la boucle de courant (3) au moyen d'un appareil HART (1) via les bornes de raccordement ;
- Relecture d'un signal de tension de test de la boucle de courant (3) au moyen des bornes de raccordement de l'appareil HART, lequel signal de tension de test est basé sur le signal de test émis ;
- Comparaison du signal de tension de test avec un signal de référence (11b) ;
- Mise en circuit de la résistance de communication (6) dans la boucle de courant (3) dans le cas où le signal de tension de test dépasse le signal de référence (11b),
un signal Carrier Detect (14) étant utilisé à des fins de vérification après la mise en circuit de la résistance de communication (6), lequel signal est émis par le modem HART (9) et, dans le cas où le signal Carrier Detect (14) indique un signal de porteuse valable, la résistance de communication (6) reste en circuit, et dans le cas où le signal Carrier Detect (14) indique un signal de porteuse non valable, la résistance de communication (6) est mise hors circuit.

2. Procédé selon la revendication 1, pour lequel un préambule au sein d'une communication HART est utilisé comme signal de test.

3. Procédé selon la revendication 1 ou 2, pour lequel le signal de tension de test relu est filtré avant qu'il ne soit comparé avec le signal de référence.

4. Procédé selon la revendication 3, pour lequel le signal de tension de test est filtré à l'aide d'un filtre passe-bande avec une fréquence centrale d'env. 1 200 Hz.

5. Procédé selon la revendication 3, pour lequel le signal de tension de test est filtré au moyen d'un filtre passe-bas avec une fréquence de coupure d'env. 1 200 Hz.

6. Procédé selon l'une ou plusieurs des revendications précédentes, pour lequel la comparaison entre le signal de tension de test et le signal de référence (11b) est effectuée pendant une durée prédéfinie et, uniquement dans le cas où le signal de tension de test dépasse pendant la durée prédéfinie le signal de référence (11b), la résistance de communication (6) est mise en circuit.

7. Procédé selon l'une ou plusieurs des revendications précédentes, pour lequel la résistance de communication (6) est mise hors circuit avant l'émission d'un signal de test.

8. Appareil HART avec une électronique de communication, laquelle est conçue de telle sorte à réaliser le procédé selon l'une ou plusieurs des revendications précédentes.
